# DEMANDE DE BREVET EUROPEEN

(11) **EP 1 401 142 A1**
(43) Date de publication de la demande: **24.03.2004**
(21) Numéro de dépôt: 03292182.7
(22) Date de dépôt: 05.09.2003
(51) Int. Cl.: H04L 9/08

(54) **Procede de signature electronique, programme et serveur pour la mise en oeuvre du procede**

(30) Priorité: 18.09.2002 FR 0211548
(71) Demandeur: FRANCE TELECOM, 75015 Paris (FR)
(72) Inventeur: Arditti David, 92140 Clamart (FR); Frisch Laurent, 75013 Paris (FR); Mouton Dimitri, 75015 Paris (FR)
(74) Mandataire: Loisel, Bertrand

(57) **Abrégé**

Pour exécuter une signature électronique depuis un poste client (1) disposant de ressources d'authentification auprès d'un serveur (2), on procède aux étapes suivantes: authentifier le poste client auprès du serveur, en établissant ainsi un canal de communication authentifié; générer un couple clé privée - clé publique au poste client; transmettre du poste client au serveur, sur le canal authentifié, une requête de certificat de signature générée au moyen d'au moins la clé publique; retourner sur le canal authentifié un certificat de signature obtenu en réponse à ladite requête; vérifier ce certificat au poste client; calculer une signature électronique au poste client au moyen de la clé privée, puis détruire cette clé privée; et mettre en forme la signature calculée à l'aide du certificat de signature reçu sur le canal authentifié.

## Description

La présente invention concerne les techniques de cryptographie utilisant des clés publiques. Elle se rapporte plus particulièrement aux méthodes de certification de clés cryptographiques.

L'objet fondamental permettant d'avoir confiance en la partie publique d'une clé cryptographique (clé publique) est le certificat. Le standard de certificat utilisé dans de nombreux réseaux dont l'Intemet est X.509, version 3. Une spécification en est fournie par le groupe de travail PKIX de l'IETF ("Internet Engineering Task Force") dans la Request For Comments (RFC) 3280, "Internet X.509 Public Key Infrastructure; Certificate and Certificate Revocation List (CRL) Profile" publiée en avril 2002. Le certificat est un objet comprenant notamment:
- la clé publique à certifier;
- l'identité de son possesseur;
- une période de validité;
- une signature cryptographique de ces données par la clé privée d'une Autorité de Certification (AC en abrégé) émettrice du certificat.

Avoir confiance en la clé publique associée à une identité revient à s'assurer de la validité du certificat. Pour PKIX, un certificat est valide à un instant T donné (en termes de confiance):
- soit s'il est explicitement déclaré comme "certificat de confiance". En pratique, les certificats des utilisateurs ne sont jamais déclarés de confiance. On déclare plutôt un nombre réduit de certificats de confiance, consistant en les certificats de certaines AC;
- soit s'il vérifie les conditions suivantes:
   - la signature cryptographique du certificat est mathématiquement valide;
   - l'instant T fait partie de la période de validité du certificat;
   - le certificat n'est pas révoqué à l'instant T;
   - la clé publique de l'AC émettrice est disponible par un certificat de l'AC, et ce certificat de l'AC est lui-même valide à l'instant T.

Un certificat est révoqué à un instant TR de sa période de validité si, à partir de cet instant, l'AC qui l'a émis a un doute sur la compromission de la clé privée associée au certificat. Le but est d'invalider le certificat à partir de TR. En pratique, c'est le cas quand l'utilisateur du certificat perd sa clé privée associée à la clé publique certifiée ou se la fait voler, quand l'AC ne souhaite plus certifier la clé de l'utilisateur (par exemple quand un employé quitte une entreprise), etc.

D'après PKIX, un certificat révoqué doit être mis dans une liste de révocation (CRL, "Certificate Revocation List") qui est une liste de certificats émis par une AC et révoqués par celle-ci. En théorie, une AC ne doit jamais retirer un certificat d'une CRL. Par exemple, si une signature est émise à un instant T avec un certificat révoqué à T, il faut pouvoir contrôler de façon pérenne que le certificat était bien révoqué à T et donc la signature invalide.

Il existe deux moyens courants de contrôler la non-révocation d'un certificat donné:
- l'accès à la CRL. Le vérificateur du certificat télécharge la CRL auprès d'un serveur, vérifie la signature de la CRL puis recherche le certificat à vérifier dans la CRL;
- le contrôle de non-révocation en ligne. Afin d'éviter au vérificateur de télécharger des CRL potentiellement volumineuses, un protocole en ligne a été défini pour effectuer le contrôle sur seulement un ou quelques certificats. Il s'agit du protocole OCSP décrit dans la RFC 2560, "Internet X.509 Public Key infrastructure; Online Certificate Status Protocol - OCSP, publiée en juin 1999 par l'IETF. Selon ce protocole, le vérificateur du certificat adresse une requête OCSP à un serveur OCSP dépendant de l'AC émettrice, récupère la réponse OCSP signée en provenance de ce serveur, vérifie la signature de la réponse OCSP et analyse cette réponse.

L'utilisation d'OCSP est en ligne. L'utilisation des CRL est soit en ligne, soit hors ligne mais avec mise à jour régulière des CRL.

Dans une infrastructure à clé publique, lorsqu'un certificat arrive à expiration, un mécanisme de renouvellement permet à l'Autorité de Certification de délivrer un nouveau certificat à l'utilisateur sans avoir à effectuer de nouveau la phase d'enregistrement, qui consiste en la collecte et la vérification des données relatives à l'utilisateur.

Les certificats au format X.509 sont produits à des fins exprimées explicitement, appelées "key usage" ("usage de clé", par exemple: signature électronique, chiffrement, authentification, horodatage, serveur SSL, etc). Un certificat peut avoir un key usage composite. Cependant, afin de limiter les dangers en cas de compromission d'un certificat, il est prudent et courant de n'attribuer qu'un nombre restreint de ces key usages à un même certificat. Ainsi, un utilisateur pourra dans certains cas disposer de plusieurs certificats, chacun correspondant à une utilisation différente. Le problème est alors d'une part la difficulté pour l'utilisateur de s'y retrouver parmi ces certificats, et d'autre part un coût de gestion élevé pour l'autorité de certification. Il est donc intéressant de pouvoir diffuser des certificats avec un key usage restreint, le moins possible par utilisateur, sans pour autant restreindre l'utilisation applicative que cet utilisateur pourra en faire.

Les mécanismes cryptographiques à clé publique sont utilisables pour rendre plusieurs services ayant des caractéristiques différentes, qui justifient un traitement différent des certificats servant à rendre chacun des services. Parmi ces services, on peut citer:
- la confidentialité (chiffrement): les données chiffrées doivent pouvoir être recouvrées en cas de perte de la clé privée, sous peine d'être perdues définitivement. Pour cette raison, les clés de chiffrement sont séquestrées et recouvrables;
- la signature électronique: la clé de signature doit exister en un seul exemplaire, possédé par le titulaire du certificat, afin d'être certain que personne d'autre n'a pu réaliser de signature en son nom. La clé ne pouvant être dupliquée, on ne peut pas la séquestrer et elle doit être distincte de la clé de chiffrement. Les signatures doivent être vérifiables au-delà de la durée de validité du certificat, de sorte qu'il faut conserver le certificat pour pouvoir effectuer ces vérifications;
- l'authentification: la clé d'authentification doit également être unique, donc distincte de celle de chiffrement. Mais il faut éviter que l'on puisse faire effectuer à l'utilisateur une signature électronique en lui faisant croire qu'il ne fait que s'authentifier. Cela pourrait être fait en remplaçant par un message le défi utilisé dans un schéma d'authentification par défi-réponse à clé publique. Un tel message risquerait d'être signé par l'utilisateur à son insu. Il faut donc aussi distinguer la clé d'authentification de la clé de signature. De plus, le certificat d'authentification n'a en général pas besoin d'être conservé au-delà de sa durée de vie, puisqu'il n'est utilisé que dans des opérations à vérification unique, instantanée, et non persistantes.

Il est donc souvent nécessaire de spécialiser les certificats, et un utilisateur qui veut utiliser plusieurs des services ci-dessus a besoin de disposer d'autant de certificats. Les certificats cryptographiques ont une durée de vie déterminée dans la Politique de Certification de l'Autorité de Certification qui les émet. Cette durée est typiquement d'un à trois ans pour des certificats d'utilisateurs.

Cette durée étant longue, il est nécessaire de prévoir la possibilité de compromission de la clé certifiée au cours de la période de validité du certificat. Un mécanisme de révocation et de contrôle de révocation est donc mis en place pour permettre d'invalider un certificat qui ne doit plus être utilisé. D'autre part, le fait qu'une signature électronique ait été effectuée avec un certificat de durée de vie relativement longue ne donne que peu d'indications sur la date à laquelle la signature a été effectuée. Il faut donc coupler le mécanisme de signature électronique à un mécanisme d'horodatage.

La fonction de signature électronique permet de garantir l'authenticité d'un document, c'est-à-dire d'authentifier de façon sûre son ou ses signataires et de garantir que le document n'a pas été modifié (intégrité). La signature électronique est souvent utilisée pour garantir la non-répudiation. La non-répudiation d'un document consiste à se prémunir contre un déni ultérieur de son auteur.

Les formats les plus couramment utilisés pour des messages signés sont:
- PKCS#7, publié par la société RSA Security, Inc. et par l'IETF en mars 1998 (RFC 2315, "PKCS #7: Cryptographic Message Syntax; Version 1.5"), qui a été repris dans CMS ("Cryptographic Message Syntax", RFC 2630, IETF, juin 1999). Ces standards sont utilisés notamment dans la spécification S/MIME ("Secure Multipurpose Internet Mail Extensions") pour les courriers électroniques signés. Ils reposent sur des certificats issus de PKIX (X.509, CRL, OCSP) et sont "extensibles" dans le sens où il est possible de rajouter des extensions (compléments d'information) signées (authenticatedAttributes) ou non (unauthenticatedAttributes);
- XML-DSig, faisant partie de la famille des formats de données XML ("eXtended Markup Language"). Ce format permet d'utiliser les certificats issus de PKIX, et est également extensible;
- PGP correspondant aux messages signés issus du logiciel PGP ("Pretty Good Privacy" commercialisé par la société Networks Associates Technology, Inc.) et de ses analogues. Ses certificats sont différents de ceux issus de PKIX.

Ces formats de signature électronique imposent naturellement que le certificat de signature ait un key usage permettant la signature. Cependant, le key usage en question n'est pas toujours le même en fonction des outils utilisés. Par exemple, les logiciels de messagerie "Netscape Mail" de la société Netscape Communications Corporation et "Outlook Express" de la société Microsoft Corporation requièrent des key usages différents. En outre, il est interdit de signer si le certificat n'a pas un de ces key usages.

Il existe des services permettant à un utilisateur de réaliser une signature électronique sans disposer lui-même d'un matériel cryptographique. Des services de ce genre peuvent fonctionner sous plusieurs modes:
1/ l'utilisateur est enregistré auprès d'un serveur qui conserve sous forme chiffrée une clé de signature bloquée et un certificat à son nom. Lorsque l'utilisateur souhaite effectuer une signature, il envoie au serveur les données à signer, ainsi qu'un mot de passe pour le déchiffrement et le déblocage de sa clé de signature. Le serveur utilise ce mot de passe et ces données pour effectuer la signature, et renvoie le résultat à l'utilisateur. Un inconvénient de ce mode de fonctionnement est que l'utilisateur n'a pas la maîtrise de ses moyens de signature. Puisque les signatures ne se font pas sur son poste, il ne peut être certain que le serveur ne va pas effectuer d'autres signatures à son insu.
2/ l'utilisateur est enregistré auprès d'un serveur qui conserve sous forme chiffrée une clé de signature et un certificat à son nom. Lorsque l'utilisateur souhaite effectuer une signature, il s'authentifie auprès du serveur, et le serveur lui envoie sa clé de signature chiffrée. L'utilisateur déchiffre sa clé grâce à un mot de passe connu de lui seul, effectue sa signature grâce à cette clé, puis efface cette clé de son poste de travail. Un inconvénient de ce mode de fonctionnement est la présence des clés de signature dans une base de données du serveur. Un individu malveillant qui aurait accès à la base de clés pourrait tenter une attaque sur ces clés chiffrées afin de les déchiffrer, et par la suite de s'en servir pour effectuer des signatures à l'insu du titulaire de la clé.

Quand on utilise une signature électronique pour assurer la non-répudiation, on souhaite que la signature soit valide un certain temps. En général, la validité nécessaire pour la signature (couramment de l'ordre de la dizaine d'années) est largement supérieure à la période de validité d'un certificat (couramment un an). En outre, on souhaite généralement ne pas disposer seulement d'une signature, mais également de la date (voire de l'heure) de signature.

Il existe plusieurs méthodes bien connues pour placer une signature dans le temps (horodatage) et pour étendre la période de validité d'une signature au-delà de celle du certificat du signataire:
- horodatage non consensuel: le signataire place lui-même la donnée d'horodatage dans son document et signe cette donnée comme partie intégrante du document. Cela ne garantit que l'accord du signataire lui-même sur l'heure, et ne permet pas de rallonger la validité de la signature. Dans une autre réalisation, l'horodatage non consensuel est apposé par un serveur et conservé avec la signature;
- horodatage consensuel: le signataire et le destinataire du document signé se mettent d'accord sur un horodatage, que le signataire place dans son document et qu'il signe en même temps. Une variante consiste à faire d'abord signer l'horodatage par Se destinataire, et à placer plutôt cet horodatage signé dans le document. Dans les deux cas, selon le degré de protection offert par le protocole, on peut considérer que la signature est correctement placée dans le temps. Par contre, cela ne permet pas non plus de rallonger la validité de la signature;
- horodatage sûr: une fois le document signé, le signataire fait appel à un "tiers d'horodatage". C'est un tiers de confiance disposant d'une clé et d'un certificat de longue durée, c'est-à-dire dont la durée couvre la période de validité de la signature. Le tiers d'horodatage lui renvoie un jeton d'horodatage qui comprend l'horodatage et une référence unique au document signé, le jeton étant lui-même signé par le tiers d'horodatage avec sa clé de longue durée. Ce jeton garantit l'instant d'horodatage du document de façon cryptographiquement sûre. Cela permet d'une part de définir l'heure de signature par l'heure du jeton, et d'autre part de rallonger la validité de la signature en l'étendant à la période de validité du jeton d'horodatage. Il existe notamment un standard IETF sur l'horodatage, à savoir le protocole TSP (RFC 3161, "Internet X.509 Public Key Infrastructure; Time-Stamp Protocol", août 2001).

Plusieurs procédés sont utilisables pour l'authentification d'un utilisateur auprès d'un serveur:
- le mot de passe statique. Il s'agit d'une chaîne de caractères que l'utilisateur transmet au serveur. Le serveur peut connaître également ce mot de passe et le comparer directement la valeur transmise à la valeur connue. Sinon, il peut connaître le résultat d'une opération effectuée sur ce mot de passe, et il effectue d'abord cette opération sur la valeur transmise avant d'effectuer la comparaison;
- le questionnaire. Plusieurs questions sont posées à l'utilisateur, qui est censé être le seul à connaître les réponses, et qui a préalablement répondu aux mêmes questions pour en enregistrer les réponses. Les questions sont en général du type: nom de jeune fille de la mère, équipe de football préférée, héros de dessin animé favori, nom du chien, etc.;
- le mot de passe calculé. L'utilisateur possède un dispositif qui effectue un calcul, à chaque fois différent, prenant en compte une clé secrète partagée entre le dispositif et le serveur, et un élément pseudo-aléatoire tel que l'heure. Le serveur effectue le même calcul et compare les résultats. Si les valeurs sont identiques, l'utilisateur est bien en possession du dispositif, donc il est bien celui qu'il prétend être;
- le mot de passe non réutilisable. L'utilisateur possède un certain nombre de codes à usage unique, par exemple sous la forme de cartes à gratter, qui sont référencés auprès du serveur. Si le code présenté pour s'authentifier fait bien partie de ceux que l'utilisateur est censé posséder, alors l'authentification réussit;
- le défi-réponse à clé secrète. L'utilisateur partage une clé secrète avec le serveur. Le serveur envoie un nombre aléatoire à l'utilisateur ("défi"). L'utilisateur effectue un calcul sur ce défi à l'aide de la clé secrète et renvoie le résultat du calcul ("réponse"). Le serveur effectue le même calcul et compare son résultat avec la réponse renvoyée par l'utilisateur. En cas de concordance, l'utilisateur est authentifié;
- le défi-réponse à clé publique. L'utilisateur est seul à disposer d'une clé privée. Le serveur connaît la clé publique correspondant à cette clé privée, par exemple sous la forme d'un certificat. Le serveur envoie un défi aléatoire à l'utilisateur, qui effectue sur ce défi un calcul à l'aide de sa clef privée. La réponse résultante est retournée au serveur qui lui applique le calcul inverse à l'aide de la clé publique. S'il retrouve le défi qu'il avait envoyé, l'utilisateur est authentifié.

Il est à noter qu'il ne suffit généralement pas de disposer d'une ressource d'authentification pour signer électroniquement un document. Pour effectuer une signature électronique, il faut être le seul à disposer d'un secret, alors que dans la plupart des mécanismes d'authentification (sauf le défi-réponse à clé publique), le secret doit être partagé afin de pouvoir être vérifié par le serveur.

Un but de la présente invention est de proposer un procédé simple et efficace permettant à un utilisateur disposant de ressources d'authentification d'effectuer une signature électronique.

L'invention propose ainsi un procédé de signature électronique depuis un poste client, comprenant les étapes suivantes:
/A/ authentifier le poste client auprès d'un serveur, en établissant ainsi un canal de communication authentifié entre le poste client et ledit serveur;
/B/ générer un couple clé privée - clé publique au poste client;
/C/ transmettre du poste client au serveur, sur le canal authentifié, une requête de certificat de signature générée au moyen d'au moins la clé publique;
/D/ transmettre du serveur au poste client, sur le canal authentifié, un certificat de signature obtenu en réponse à ladite requête;
/E/ calculer une signature cryptographique au poste client au moyen de la clé privée, puis détruire la clé privée au poste client; et
/F/ mettre en forme la signature calculée à l'aide du certificat de signature reçu par le poste client sur le canal authentifié.

De façon usuelle, l'authentification du poste client s'entend, selon le contexte d'utilisation du procédé, comme une authentification de la plate-forme matérielle et/ou logicielle du poste ou comme une authentification d'un abonné ou d'un utilisateur du poste.

Une phase préalable consistera généralement en un enregistrement du poste client (ou de son utilisateur) auprès d'une AC avec laquelle coopère le serveur, ou d'une Autorité d'Enregistrement associée à cette AC. Cette phase préalable permet d'obtenir les données nécessaires à la création d'un certificat de signature pour le poste.

Le certificat de signature obtenu par le serveur a de préférence une durée de validité relativement courte, typiquement d'une journée au plus.

Le procédé permet à un utilisateur disposant simplement de ressources d'authentification d'effectuer une signature électronique, tout en ne requérant qu'une gestion simple des clés et des certificats. Même si un horodatage (consensuel ou non, sûr ou non) peut être adjoint à la signature ainsi réalisée, la durée de validité du certificat permet déjà de placer la signature dans le temps.

Dans une réalisation préférée, les étapes /C/ et /E/ sont exécutées en parallèle au poste client. Il n'est en effet pas nécessaire que le client attende de disposer du certificat pour procéder à la signature cryptographique, et ensuite il n'a plus besoin de la clé privée.

Le procédé est bien adapté aux environnements permettant le chargement d'applications entre le serveur et les clients, au moyen de langages à code mobile, dont le plus répandu est le langage "Java" défini par la société Sun Microsystems, Inc. Dans ce cas, une possibilité avantageuse est que les étapes /B/, /C/, /E/ et /F/ soient au moins en partie exécutées au poste client sous le contrôle d'un programme téléchargé par le serveur en réponse à l'étape /A/.

Dans ce contexte, l'invention a aussi pour objet un serveur d'assistance à la signature électronique, comprenant des moyens d'authentification d'un poste client pour établir un canal de communication authentifié avec celui-ci, des moyens pour obtenir un certificat de signature en réponse à une requête reçue du poste client sur le canal authentifié et pour transmettre ledit certificat au poste client sur le canal authentifié, et des moyens pour télécharger vers le poste client un programme écrit en langage à code mobile et incluant des instructions pour contrôler au moins en partie l'exécution des opérations suivantes par le poste client:
- génération d'un couple clé privée - clé publique au poste client après établissement du canal authentifié;
- transmission au serveur, sur le canal authentifié, d'une requête de certificat de signature générée au moyen d'au moins la clé publique;
- réception, sur le canal authentifié, du certificat de signature transmis par le serveur en réponse à ladite requête;
- calcul d'une signature cryptographique au moyen de la clé privée, puis destruction de la clé privée; et
- mise en forme de la signature calculée à l'aide du certificat de signature reçu sur le canal authentifié.

Un autre aspect de la présente invention se rapporte à un produit de programmation d'ordinateur, comprenant des instructions à exécuter dans un poste client disposant de ressources d'authentification auprès d'un serveur d'assistance à la signature électronique, lesdites instructions incluant:
- des instructions pour générer un couple clé privée - clé publique après établissement d'un canal de communication authentifié entre le poste client et ledit serveur;
- des instructions pour transmettre au serveur, sur le canal authentifié, une requête de certificat de signature générée au moyen d'au moins la clé publique;
- des instructions pour recevoir du serveur, sur le canal authentifié, un certificat de signature obtenu en réponse à ladite requête;
- des instructions pour calculer une signature cryptographique au moyen de la clé privée puis pour détruire la clé privée; et
- des instructions pour mettre en forme la signature calculée à l'aide du certificat de signature reçu sur le canal authentifié.

Ce produit de programmation peut être téléchargé d'un serveur d'assistance comme évoqué ci-dessus. Il peut aussi, en totalité ou en partie, être un programme résident de la plate-forme constituant le poste client.

D'autres particularités et avantages de la présente invention apparaîtront dans la description ci-après d'exemples de réalisation non limitatifs, en référence aux dessins annexés, dans lesquels :
- la figure 1 est un diagramme illustrant un exemple de mise en oeuvre du procédé selon l'invention;
- la figure 2 est un diagramme illustrant une variante du procédé selon l'invention.

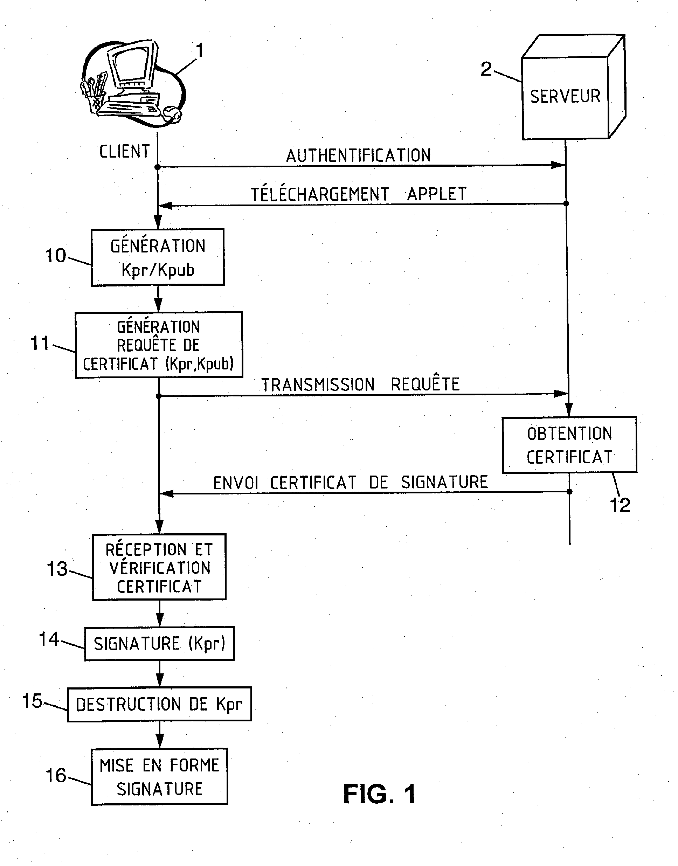

La figure 1 montre un poste client 1 disposant de ressources d'authentification, mais ne disposant pas de ressources (clés) de signature électronique. Le procédé illustré par la figure lui permet néanmoins de signer électroniquement un document. Le poste client 1 entre pour cela en relation avec un serveur 2 d'assistance à la signature électronique.

Le serveur 2 est apte à relayer des requêtes de certificat (CSR, "Certificate Signing Request") qu'il reçoit vers une autorité de certification (AC) qui les signe en faisant confiance au serveur. Le serveur peut en particulier être confondu l'AC. Sinon, il peut se connecter avec authentification mutuelle à une AC, par exemple au moyen de la version 3 du protocole SSL ("Secure Sockets Layer" défini par la société Netscape Communications Corporation). La communication entre l'AC et le serveur 2 peut éventuellement être chiffrée.

Lors d'une phase préalable, l'utilisateur du poste client s'est enregistré auprès de l'AC, qui vérifie formellement son identité conformément à sa Politique de Certification, et dispose ainsi de toutes les données nécessaires à la création d'un certificat de signature. Cet enregistrement peut aussi être effectué auprès d'une Autorité d'Enregistrement coopérant avec l'AC.

A titre d'exemple non-limitatif, le poste client 1 peut utiliser, comme il est courant, un logiciel de navigation web capable d'exécuter des programmes écrits dans un langage à code mobile tel que Java. De tels navigateurs sont par exemple "Internet Explorer" de la société Microsoft Corporation, "Netscape Navigator" de la société Netscape Communications Corporation etc.

Ce poste client dispose par exemple d'un certificat d'authentification de type SSL. Le serveur 2 est dans ce cas équipé des fonctionnalités classiques lui permettant lui permettant d'établir une session SSLv3 sécurisée avec le poste client 1 après avoir procédé à son authentification. C'est dans cette session SSLv3 que seront échangés entre le poste client 1 et le serveur 2 tous les messages illustrés sur la figure 1.

La première étape du procédé de la figure 1 consiste ainsi en l'authentification de l'utilisateur du poste client 1 auprès du serveur 2, et en la création du canal authentifié, correspondant dans cet exemple à la session SSLv3 établie. Dans le cas décrit où les échanges client-serveur se font dans une session SSLv3, il est de préférence effectué une authentification mutuelle du serveur et du poste client. On pourrait cependant se contenter d'authentifier simplement le client 1, ou employer un protocole autre que SSL.

Ensuite, le serveur 2 télécharge sur ce canal authentifié un programme écrit dans le langage à code mobile ("applet" dans le jargon de Java), comportant des instructions pour exécuter au poste client 1 les opérations illustrées par la partie gauche de la figure.

La première de ces opérations (étape 10) est la génération d'un couple clé privée (Kpr) - clé publique (Kpub) permettant la signature selon un procédé de cryptographie asymétrique de type connu, par exemple RSA ("Rivest, Shamir, Adelman"), DSA ("Digital Signature Algorithm"), EC-DSA ("Elliptic Curve DSA"), etc.

Ensuite, l'applet fait générer au poste client 1 une requête de certificat de signature (étape 11). Cette requête est générée à partir d'au mois la clé publique Kpub obtenue à l'étape 10. Fréquemment, elle sera générée à partir du couple Kpr - Kpub. La requête est transmise au serveur 2 dans la session SSLv3.

La requête de certification (CSR) transmise par le client peut être de tout format acceptable, standardisé ou propriétaire. Parmi les formats standardisés actuellement utilisables, on peut citer à titre non exhaustif: SPKAC, PKCS#10, CRS. La requête de certification peut contenir la preuve de possession de la clef publique ou non, des informations sur l'utilisateur ou non, et toute autre information susceptible d'y être incluse et décrite dans la Politique de Sécurité du service.

Le serveur 2 se charge alors (étape 12) d'obtenir pour le poste client 1 un certificat de signature de courte durée, qui permettra de certifier la clé publique Kpub. Le certificat est généré localement quand le serveur est confondu avec l'AC. Sinon, la requête CSR est relayée à l'AC et le serveur 2 obtient le certificat de la part de celle-ci.

Le certificat obtenu à l'étape 12 est avantageusement un certificat X.509 de courte durée (par exemple une journée, ou une heure), et comprend un key usage permettant de signer et dépendant de l'application au sein de laquelle la signature doit être effectuée. Il est transmis au poste client 1 dans la session SSLv3.

Le poste client 1 reçoit ce certificat de signature à l'étape 13, et en extrait les paramètres requis par l'applet pour la mise en forme des signatures électroniques.

L'applet exécute la signature cryptographique du document à l'étape 14 au moyen de la clé privée Kpr générée à l'étape 10, puis elle commande la destruction de cette clé privée Kpr à l'étape 15.

Une fois la signature effectuée et le certificat récupéré, l'applet met en forme la signature électronique à l'étape 16, par exemple au format PKCS#7 en incluant le certificat dans l'enveloppe PKCS#7. Le document signé peut alors être stocké ou transmis à des tiers (non représentés). Indépendamment de la signature cryptographique calculée à l'étape 14, la signature électronique (c'est-à-dire mise en forme) peut avoir n'importe quel format de signature: PKCS#7/CMS, XML-Dsig, PGP, etc.

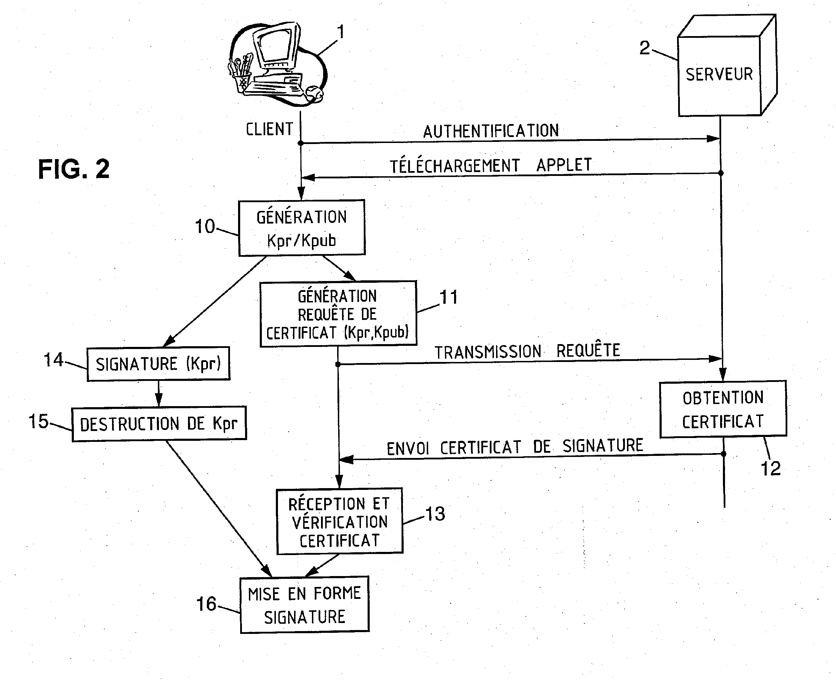

Dans la variante préférée illustrée par la figure 2, le poste client 1 exécute en parallèle les étapes 11 et 13 d'une part et les étapes 14 et 15 d'autre part.

L'invention n'est pas limitée aux modes de réalisation qui ont été décrits plus haut.

L'authentification de l'utilisateur du poste client 1 par le serveur 2 peut notamment être effectuée par tout moyen d'authentification offrant le niveau de sécurité voulu, en conformité avec la Politique de Sécurité définie par l'AC pour le service de signature électronique. Parmi les modes d'authentification possibles, on peut citer:
- le mot de passe statique, utilisé dans le cadre d'un protocole propriétaire ou normalisé, quelles que soient la taille du mot de passe ou les autres contraintes qui lui sont imposées;
- le questionnaire, utilisé dans le cadre d'un protocole propriétaire ou normalisé, quels que soient le nombre de questions, la forme de ces questions, leur langue ou leur nature (mots, phrases, dessins, ...);
- le mot de passe calculé, utilisé dans le cadre d'un protocole propriétaire ou normalisé, quels que soient la taille de ce mot de passe et son mode de calcul;
- le mot de passe non réutilisable, utilisé dans le cadre d'un protocole propriétaire ou normalisé, quels que soient le support physique du mot de passe, sa forme, sa nature, sa taille;
- le défi-réponse à clef secrète, utilisé dans le cadre d'un protocole propriétaire ou normalisé, quels que soient le support de la clef secrète, le mode et l'algorithme de calcul de la réponse, la nature, la forme, la taille du défi et de la réponse;
- le défi-réponse à clef publique, utilisé dans le cadre d'un protocole propriétaire ou normalisé, quels que soient la nature, la taille et le support de la clef privée, le mode et l'algorithme de calcul de la réponse, la nature, la forme, la taille du défi et de la réponse, la nature du certificat et/ou de la clef publique.

Le procédé selon l'invention peut être employé dans tout type d'environnement, par exemple:
- dans le cadre d'un service web dans un navigateur, sous forme d'une applet comme décrit précédemment, mais aussi sous forme de script, d'appel à un composant de type "plug-in", à un programme extérieur, à un composant de type "ActiveX", à une librairie dynamique, etc.;
- dans le cadre d'un client de messagerie, par exemple sous forme d'appel à un composant de type "plug-in", à un programme extérieur, à une librairie dynamique, etc.;
- dans le cadre d'une application indépendante, comme partie d'un service plus large tel que par exemple un service d'archivage sécurisé, de publication sécurisée de documents, de gestion de flux de données ("workflow", "dataflow"), etc.;
- en tant que service autonome.

Le client peut ne pas souhaiter authentifier le serveur. Il lui suffit alors de vérifier la validité du certificat délivré une fois qu'il l'aura reçu. Dans le cas où le client authentifie du serveur, il peut soit faire confiance à la validité du certificat puisqu'il a été délivré par un serveur de confiance, soit vérifier tout de même la validité de ce certificat par les méthodes traditionnelles de vérification de chaîne de certificats de confiance.

Le protocole employé entre le client 1 et le serveur d'authentification 2 peut être un protocole normalisé ou un protocole propriétaire. Ce protocole peut être sécurisé ou non. Un exemple de protocole non sécurisé utilisable est HTTP ("Hypertext Transfer Protocol", RFC 2616, juin 1999, IETF). Parmi les protocoles sécurisés utilisables, on peut citer SSH de la société SSH Communications Security, ou HTTPS (HTTP sur SSLv2 ou SSLv3).

Un horodatage sûr peut être adjoint à la signature, avant ou après la requête de certification. Cet horodatage peut être fourni par le même serveur que le reste du service ou par un serveur distinct. Il peut notamment être obtenu auprès d'un serveur d'horodatage, directement ou par l'intermédiaire du serveur d'authentification. Cet horodatage peut être à tout format techniquement correct et accepté dans le cadre de la Politique de Sécurité du service dans le cadre duquel le procédé est employé.

Dans le cas particulier décrit ci-dessus, c'est une applet qui se charge de générer les clés de signature (étape 10) puis d'effectuer la signature cryptographique et la mise en forme (étapes 14 et 16). Pour la fonction de génération de la clé à proprement parler, il y a également des alternatives:
- l'applet peut faire appel à une fonctionnalité déjà présente dans le poste client pour générer la clé;
- la génération de la clé peut avoir lieu avant le début d'exécution de l'applet, par le programme cadre (par exemple le navigateur ou l'outil de messagerie).

D'autre part, l'applet peut faire appel à une fonctionnalité déjà présente sur le poste pour exécuter la signature cryptographique et/ou la mettre en forme.

## Revendications

1. Procédé de signature électronique depuis un poste client (1), comprenant les étapes suivantes:
/A/ authentifier le poste client auprès d'un serveur (2), en établissant ainsi un canal de communication authentifié entre le poste client et ledit serveur;
/B/ générer un couple clé privée - clé publique au poste client;
/C/ transmettre du poste client au serveur, sur le canal authentifié, une requête de certificat de signature générée au moyen d'au moins la clé publique;
/D/ transmettre du serveur au poste client, sur le canal authentifié, un certificat de signature obtenu en réponse à ladite requête;
/E/ calculer une signature cryptographique au poste client au moyen de la clé privée, puis détruire la clé privée au poste client; et
/F/ mettre en forme la signature calculée à l'aide du certificat de signature reçu par le poste client sur le canal authentifié.

2. Procédé selon la revendication 1, dans lequel les étapes /C/ et /E/ sont exécutées en parallèle au poste client (1).

3. Procédé selon l'une quelconque des revendications précédentes, dans lequel les étapes /B/, /C/, /E/ et /F/ sont au moins en partie exécutées au poste client (1) sous le contrôle d'un programme téléchargé par le serveur (2) en réponse à l'étape /A/.

4. Procédé selon l'une quelconque des revendications précédentes, dans lequel l'étape /A/ comprend une authentification mutuelle du serveur (2) et du poste client (1).

5. Procédé selon l'une quelconque des revendications précédentes, comprenant une étape de vérification par le poste client (1) du certificat de signature reçu sur le canal authentifié.

6. Procédé selon l'une quelconque des revendications précédentes, dans lequel le certificat de signature obtenu par le serveur (2) a une durée de validité d'au plus une journée.

7. Procédé selon l'une quelconque des revendications précédentes, comprenant une phase préalable d'enregistrement du poste client auprès d'une autorité de certification avec laquelle coopère le serveur, ou d'une autorité d'enregistrement associée à cette autorité de certification.

8. Produit de programmation d'ordinateur, comprenant des instructions à exécuter dans un poste client (1) disposant de ressources d'authentification auprès d'un serveur d'assistance à la signature électronique (2), lesdites instructions incluant:
- des instructions pour générer un couple clé privée - clé publique après établissement d'un canal de communication authentifié entre le poste client et ledit serveur;
- des instructions pour transmettre au serveur, sur le canal authentifié, une requête de certificat de signature générée au moyen d'au moins la clé publique;
- des instructions pour recevoir du serveur, sur le canal authentifié, un certificat de signature obtenu en réponse à ladite requête;
- des instructions pour calculer une signature cryptographique au moyen de la clé privée puis pour détruire la clé privée; et
- des instructions pour mettre en forme la signature calculée à l'aide du certificat de signature reçu sur le canal authentifié.

9. Produit de programmation selon la revendication 8, dans lequel les instructions pour transmettre la requête de certificat de signature et les instructions pour calculer la signature électronique puis pour détruire la clé privée sont exécutables en parallèle.

10. Produit de programmation selon la revendication 8 ou 9, dans lequel certaines au moins desdites instructions font partie d'un programme écrit en langage à code mobile, téléchargeable depuis ledit serveur (2) après établissement du canal authentifié.

11. Produit de programmation selon l'une quelconque des revendications 8 à 10, dans lequel lesdites instructions incluent en outre des instructions pour vérifier le certificat de signature reçu sur le canal authentifié.

12. Serveur d'assistance à la signature électronique, comprenant des moyens d'authentification d'un poste client (1) pour établir un canal de communication authentifié avec ledit poste client, des moyens pour obtenir un certificat de signature en réponse à une requête reçue du poste client sur le canal authentifié et pour transmettre ledit certificat au poste client sur le canal authentifié, et des moyens pour télécharger vers le poste client un programme écrit en langage à code mobile et incluant des instructions pour contrôler au moins en partie l'exécution des opérations suivantes par le poste client:
- génération d'un couple clé privée - clé publique au poste client après établissement du canal authentifié;
- transmission au serveur, sur le canal authentifié, d'une requête de certificat de signature générée au moyen d'au moins la clé publique;
- réception, sur le canal authentifié, du certificat de signature transmis par le serveur en réponse à ladite requête;
- calcul d'une signature cryptographique au moyen de la clé privée, puis destruction de la clé privée; et
- mise en forme de la signature calculée à l'aide du certificat de signature reçu sur le canal authentifié.

13. Serveur d'assistance selon la revendication 12, dans lequel le certificat de signature a une durée de validité d'au plus une journée.

14. Serveur d'assistance selon la revendication 12 ou 13, dans lequel lesdites opérations comprennent en outre une vérification du certificat de signature reçu sur le canal authentifié.
